# EUROPÄISCHE PATENTSCHRIFT

(11) **EP 0 852 859 B1**
(45) Veröffentlichungstag und Bekanntmachung des Hinweises auf die Patenterteilung: **31.03.2010**
(21) Anmeldenummer: 97935444.6
(22) Anmeldetag: 22.07.1997
(51) Int. Cl.: H04J 3/06

(54) **VERFAHREN ZUR SYNCHRONISIERUNG VON DATEN, SCHNITTSTELLE ZUR ÜBERTRAGUNG**
DATA SYNCHRONISATION PROCESS, AND TRANSMISSION INTERFACE
PROCEDE DE SYNCHRONISATION DE DONNEES, ET INTERFACE DE TRANSMISSION

(30) Priorität: 24.07.1996 DE 19629699; 23.09.1996 DE 19638872
(43) Veröffentlichungstag der Anmeldung: 15.07.1998
(73) Patentinhaber: ROBERT BOSCH GMBH, 70442 Stuttgart (DE)
(72) Erfinder: KOHL, Walter, D-74348 Lauffen (DE); SCHLEUPEN, Richard, D-74379 Ingersheim (DE); KOSS, Thomas, D-72760 Reutlingen (DE); JAKOBI, Lothar, D-72574 Bad Urach (DE); NASSWETTER, Guenter, D-72810 Gomaringen (DE); SUELZLE, Helmut, D-71691 Freiberg (DE)
(86) Internationale Anmeldenummer: PCT/DE1997/001532
(87) Internationale Veröffentlichungsnummer: WO 1998/005139

(56) Entgegenhaltungen:
- EP-A- 0 008 238
- EP-A- 0 419 895
- FR-A- 2 437 038
- GB-A- 2 180 712
- US-A- 2 794 858

## Beschreibung

### Stand der Technik

Die Erfindung geht aus von einem Verfahren zur Übertragung von Daten bzw. von Schnittstellen für die Übertragung oder den Empfang von Daten nach der Gattung der unabhängigen Patentansprüche und betrifft insbesondere einen Spannungsregler mit Schnittstelle in einem Kraftfahrzeug

Aus der DE 35 06 118 ist bereits ein Verfahren zur Übertragung von Daten über eine Datenleitung bekannt, bei dem eine Folge von ersten und zweiten voneinander unterscheidbaren Zuständen auf der Datenleitung übertragen werden. Diese Zustände stellen dabei ein High-Bit oder ein Low-Bit dar.

Die GB-A-2180712 offenbart ein Verfahren zur Übertragung von Daten über eine Übertragungsleitung durch Übertragung einer Folge eines ersten oder eines zweiten voneinander unterscheidbaren Zustands auf der Übertragungsleitung, die ein High-Bit oder ein Low-Bit darstellen, wobei ein dritter Zustand auf der Übertragungsleitung erzeugbar ist, der von den ersten beiden Zuständen unterscheidbar ist, und dass der dritte Zustand als Synchronisationssignal verwendet wird. Die Zustände werden dabei anhand der Impulshöhe voneinander unterschieden.

Des Weiteren zeigt die US-A-2794858 ein Verfahren zur Übertragung von Daten von einer ersten Einrichtung, die mit wenigstens einer Übertragungsleitung mit einer zweiten Einrichtung verbunden ist, wobei Folgen eines ersten oder eines zweiten voneinander unterscheidbaren Zustandes auf der Übertragungsleitung erzeugt werden und ein dritter Zustand auf der Übertragungsleitung erzeugbar ist, der sich von den ersten beiden Zuständen unterscheidet und der dritte Zsutand als Synchronisationssignal verwendet wird. Dabei sind die beiden ersten Zustände, die Informationssignale darstellen, in ihrer Impulshöhe zu unterscheiden, wohingegen das Synchronisationssignal als dritter Zustand durch eine unterschiedliche Impulsdauer von den Informationssignalen unterschieden wird.

Dazu zeigt die EP 00 082 38 A2 ein multiplex Informationsverarbeitungssystem bei dem die Information in Form von Zwei-Bit-Paaren in deren Impulshöhe kodiert ist. Allerdings ist aus Gründen der Timingtoleranz von 25% im Rahmen der Bitabtastung bei den jeweils zwei Informationsbits das erste und das zweite Bit in ihrer Impulslänge festgelegt und zwar so, dass das zweite Bit immer doppelt so lang ist wie das erste Bit. Damit wird sichergestellt, dass die Abtastung des zweiten Bits trotz der genannten Toleranz von 25% tatsächlich auch immer im zweiten Bit erfolgt. Jeder Informationsübertragung wird außerdem ein Synchronisationsimpuls vorangestellt, der eine zu den Informationsbits deutlich erhöhte Impulslänge aufweist um diesen eindeutig als Synchronisationsimpuls erkennen zu können. Damit sind insgesamt drei unterschiedliche Impulslängen vorhanden, wobei allerdings bei den Informationsbits die Impulslänge jeweils immer gleich und festgelegt ist so dass die Information bzw. der jeweilige Zustand bitüblich in der Impulshöhe kodiert ist.

Die GB-A-2072463 zeigt ein Sprach- und Datenübertragungsnetzwerk bei dem eine an eine Zweidrahtsammelleitung angeschlossene Impulsquelle Zeitmultiplexzyklen endmarkiert, mit einem Steuerschlitz und acht Paaren von Zeitschlitzen. Ein anrufender Mikroprozessor findet ein freies Zeitschlitzpaar und adressiert im Steuerschlitz die angerufene Anschlussstelle. Die Zeitmultiplexschnittstellen der anrufenden und angerufenen Anschlussstelleneinrichtungen übertragen Impulse in den Zeitschlitzen. Die Sammelleitungsschnittstellen bewirken eine Impulsbreitenmodulation und -demodulation der Impulse für Vollduplexsprachübermittlung. Der Mikroprozessor sendet und empfängt dabei Daten durch Auslassung von Impulsen, die Null-Bits darstellen. Die Daten sind so formatiert, dass die längst möglich Unterbrechung der Sprachübermittlung zehn Zeitmultiplexzyklen beträgt in denen dann Digitaldaten übertragen werden können. Zur Synchronisierung ist ein Synchronisationssignal vorgesehen, dessen Länge ein Datensignal deutlich überschreitet.

Aufgabe der Erfindung ist es ein System darzustellen, das gegenüber dem Stand der Technik deutlich einfacher und dennoch sicherer realisiert werden kann.

### Vorteile der Erfindung

Das erfindungsgemäße Verfahren bzw. die erfindungsgemäßen Schnittstellen mit den kennzeichnenden Merkmalen der unabhängigen Patentansprüche haben dem gegenüber den Vorteil, dass alle drei Zustände durch ihre Impulsdauer klar unterscheidbar sind und durch die Synchronisation vor jedem High- oder Low-Bit die Fehler und Toleranzen nur für Einzelbits gelten.

Die Synchronisation kann daher in einer der beteiligten Datenstationen erzeugt werden und über die Datenleitung den anderen beteiligten Stationen mitgeteilt werden. Es ist so möglich, daß nur eine der beteiligten Datenstationen intern die Mittel zur Erzeugung eines Synchronisationssignals aufweist, während die anderen Stationen keine derartigen Mittel aufweisen müssen.

Besonders vorteilhaft ist, daß auch mit zwei Spannungspegeln gearbeitet werden kann. Erzielt wird dieser Vorteil, indem die Synchronisationsimpulse sowie die beiden weiteren Informationen, beispielsweise eine Nullinformation und eine Einsinformation durch Impulse mit unterschiedliche Signallängen realisiert werden. In vorteilhafter Weise beginnen die Impulse, die die beiden Informationen umfassen, gleichzeitig mit dem jeweiligen Synchronisationsimpuls. Die Übertragung erfolgt in vorteilhafter Weise zwischen einer ersten Datenstation und einer zweiten Datenstation, die durch eine Übertragungsleitung miteinander verbunden sind. Besonders vorteilhaft ist, daß das System auch bei mehreren Empfängern einsetzbar ist und ein Übertragungsprotokoll erstellt wird.

In den abhängigen Patentansprüchen werden vorteilhafte Weiterbildungen und Verbesserungen des Verfahrens bzw. der Schnittstelle nach den unabhängigen Patentansprüchen angegeben. Besonders einfach wird das Synchronisationssignal, wenn es darin besteht, daß die Datenleitung für eine vorbestimmte Mindestzeit in den dritten Zustand gebracht wird. Die empfangende Station kann sich dann auf die Signalflanke synchronisieren, die das Ende des dritten Zustands anzeigt. Das Einlesen eines High-Bit oder ein Low-Bit erfolgt dann einfacherweise dadurch, daß nach dem Synchronisationssignal eingelesen wird, ob die Datenleitung im ersten oder im zweiten Zustand vorliegt. Vorteilhaft ist weiterhin daran, daß die Länge des Synchronisationssignals oder des High-Bit oder ein Low-Bits nicht ins Gewicht fallen, soweit sie jeweils eine vorgegebene Mindestzeit überschreiten, die zur zuverlässigen Erkennung des jeweiligen Zustandes auf der Datenleitung erforderlich ist. Besonders einfach werden die verschiedenen Zustände auf der Datenleitung durch unterschiedliche Spannungspegel realisiert.

Der Einsatz der erfindungsgemäßen Schnittstellen und der erfindungsgemäßen Verfahren zur Datenübertragung ist in vorteilhafter Weise als Anwendung einer Bit-synchronen Schnittstelle im Kraftfahrzeug möglich. Eine besonders vorteilhafte Anwendung der Schnittstelle ist die Verbindung zwischen dem Spannungsregler und dem Bordnetz eines Kraftfahrzeuges. Eine Verbindung zwischen dem Spannungsregler und dem Mikrocomputer der digitalen MotorElektronik als Bestandteil des Steuergerätes ist ebenfalls in vorteilhafter Weise möglich.

### Zeichnungen

Ausführungsbeispiele der Erfindung sind in der nachfolgenden Beschreibung erläutert und in den Zeichnungen dargestellt. Es zeigen die Figur 1 schematisch zwei Datenstationen, die mit einer Datenleitung verbunden sind, Figur 3 zwei erfindungsgemäße Schnittstellen und Figur 4 eine einfache Logik zur Auswertung von Daten.

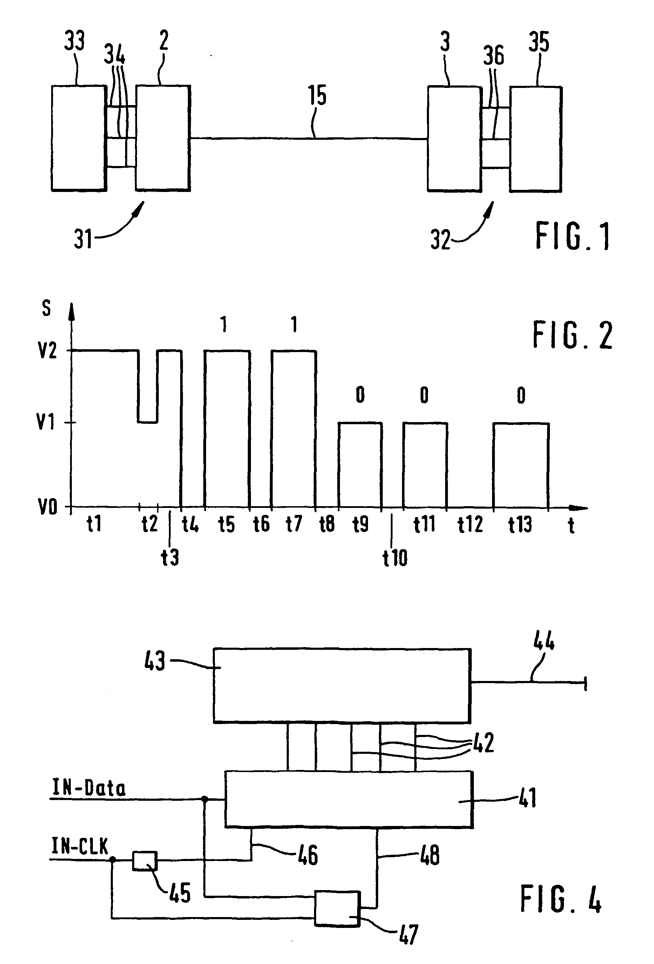

Figur 2 zeigt ein Beispiel von unterschiedlichen Zuständen auf einer Datenleitung.

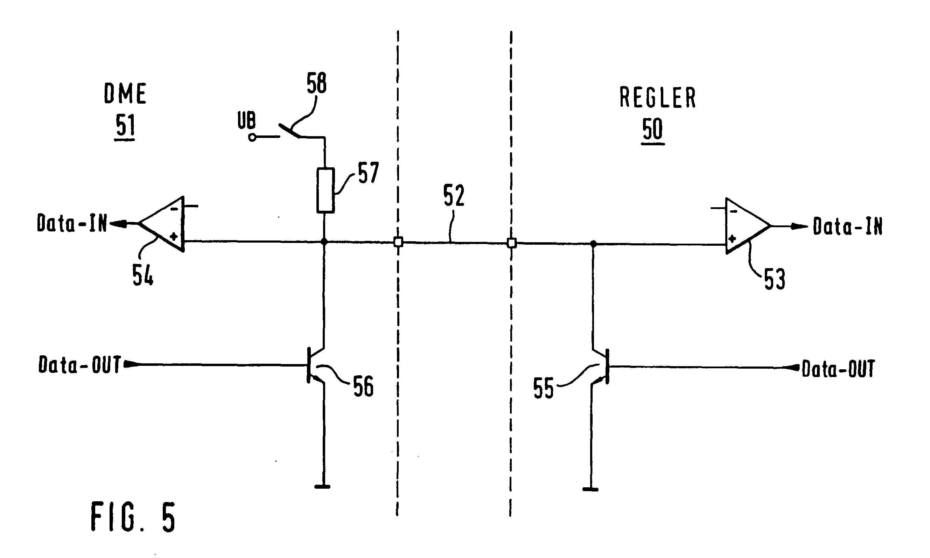

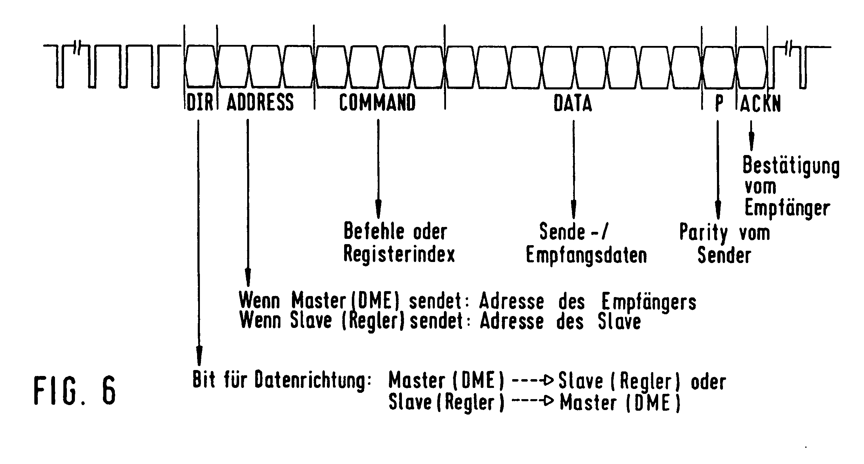

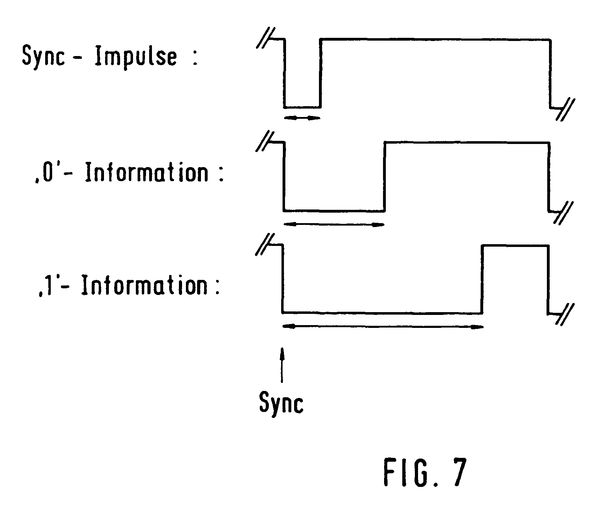

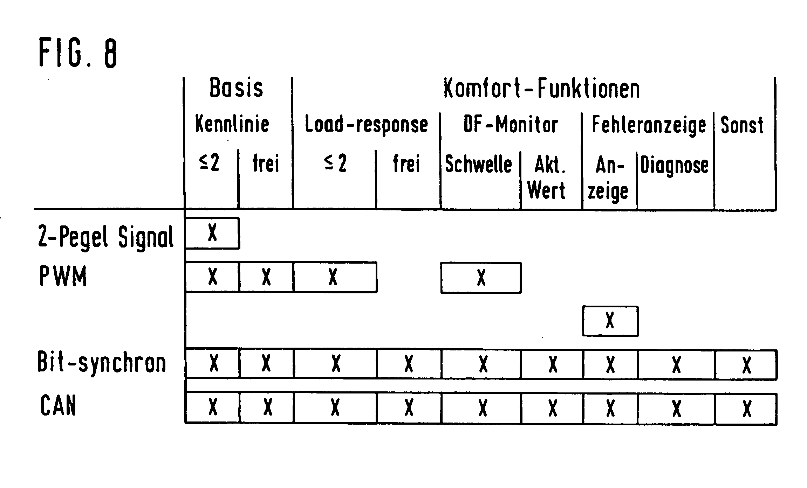

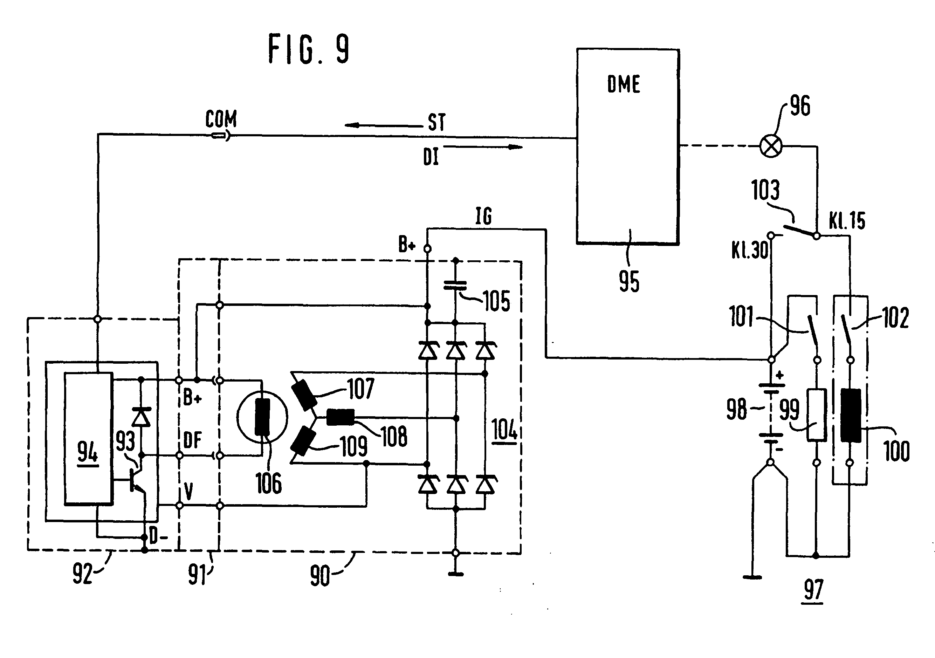

Weiterhin zeigt Figur 5 eine schaltungstechnische Ausgestaltung einer Schnittstelle zwischen dem Spannungsregler und dem Bordnetz in einem Kraftfahrzeug bzw. die Schnittstelle zwischen der digitalen Motorelektronik (DME) und dem Spannungsregler. In Figur 6 ist ein Übertragungsprotokoll angegeben und in Figur 7 eine Bitdecodierung. Figur 8 zeigt einen Vorschlag für ein Verfahren bzw. den Funktionsumfang für einen Spannungsregler mit Schnittstelle und Figur 9 zeigt ein Ausführungsbeispiel eines Spannungsreglers mit Schnittstelle als Prinzipschaltbild. In den Tabellen 1 bis 5 werden verschiedene Informationen für die Schnittstelle Spannungsregler-Bordnetz angegeben, wobei Tabelle 2 mögliche Befehle, Tabelle 3 mögliche Informationen, Tabelle 4 eine Start-/Stop-Sequenz und Tabelle 5 eine Fehlerauswertung aufzeigen.

### Beschreibung

In der Figur 1 wird eine erste Datenstation 31 und eine zweite Datenstation 32 gezeigt, die durch eine Übertragungsleitung 15 miteinander verbunden sind. Die erste Datenstation 31 weist einen Mikroprozessor 33 und eine Schnittstelle 2 auf, die über mehrere Leitungen 34 miteinander verbunden sind. Die zweite Datenstation 32 weist eine Logikschaltung 35 auf, die über mehrere Leitungen 36 mit einer Schnittstelle 3 verbunden ist. Die Schnittstellen 2 und 3 haben dabei die Aufgabe, Daten, die sie vom Mikroprozessor 33 oder von der Logikeinheit 35 erhalten, für die Übertragung über die Übertragungsleitung 15 aufzubereiten bzw. Daten die die Schnittstellen 2, 3 von der Übertragungsleitung 15 erhalten, für den Mikroprozessor 33 bzw. die Logikeinheit 35 entsprechend aufzubereiten. Wesentlich ist dabei, daß die Schnittstellen 2, 3 derart ausgebildet sind, daß auf der Übertragungsleitung 15 drei unterschiedliche Zustände realisiert werden.

Die unterschiedlichen Zustände, die auf der Übertragungsleitung 15 realisiert werden, werden in der Figur 2 in einem Diagramm dargestellt. Aufgetragen ist die Zeit t gegenüber dem Signal s, wobei das Signal hier als unterschiedliche Spannungspegel V0, V1 und V2 realisiert ist. Dabei ist V2 der höchste und V0 der geringste Spannungspegel. Im Zeitintervall bzw. Zeitdauer t1 befindet sich die Übertragungsleitung 15 im Ruhezustand der hier durch den Spannungspegel V2 realisiert ist. Für die folgende Beschreibung wird davon ausgegangen, daß die erste Datenstation 31 ein Signal an die zweite Datenstation 32 überträgt. Im Zeitintervall t2 zieht die Schnittstelle 2 die Übertragungsleitung 15 auf den Spannungspegel V1. Dadurch wird angezeigt, daß eine Datenübertragung vorgenommen werden soll. Eine derartige Vorwarnung der zweiten Datenstation 32 kann beispielsweise dazu genutzt werden, ein entsprechendes Programm in der zweiten Datenstation 32 zu aktivieren, welches die Verarbeitung der Daten vornimmt, sofern die zweite Datenstation 32 ebenfalls einen Mikrorechner zur Auswertung der Daten aufweist. Die Zeitdauer t2 und die danachfolgende Zeitdauer t3, in der auf der Übertragungsleitung 15 wieder der Ruhepegel V2 eingestellt wird, werden dabei von ihrer Länge so bemessen, daß ausreichend Zeit für die Vorbereitung der zweiten Datenstation 32 für die Aufnahme von Daten zur Verfügung steht. Der Buspegel V2 stellt im folgenden den Bitzustand High dar, während der Buspegel V1 den Bitzustand Null darstellt. Weiterhin kann die Übertragungsleitung 15 von den Schnittstellen 2, 3 noch auf den Pegel V0 gelegt werden, wie diese im Zeitintervall t4 der Fall ist. Dieses Zeitintervall t4 mit dem Spannungspegel V0 stellt ein Synchronisationssignal auf der Übertragungsleitung 15 dar. Dieses Synchronisationssignal wird beispielsweise vom Mikroprozessor 33 erzeugt und dann über eine Leitungen 34 an die Schnittstelle 2 weitergegeben. Das Synchronisationssignal wird auch als Taktsignal oder Clock (CLK) bezeichnet. In Abhängigkeit von diesem Synchronisationssignals des Mikroprozessors 33 erzeugt die Schnittstelle 2 auf der Übertragungsleitung 15 das Synchronisationssignal, indem die Übertragungsleitung 15 für eine vorgegebene Mindestzeitdauer t4 auf den Spannungspegel V0 gezogen wird. Die Mindestzeitdauer ist dabei so ausgelegt, daß die empfangende zweite Datenstation 32 dieses Signal auf der Übertragungsleitung 15 sicher erkennen kann. Die empfangende zweite Datenstation 32 benutzt dann dieses Synchronisationssignal um ein internes Synchronisationssignals zu erzeugen, mit dem die Verarbeitung der Daten getaktet wird. Dabei kann sich die empfangende Datenstation beilspielsweise auf das Ende der Zeitdauer t4 synchronisieren. Wie aus der Figur 2 zu erkennen ist, wird jedesmal, nachdem der Buspegel V0 eingenommen wurde, entweder der Buspegel V1 oder der Buspegel V2 eingenommen, d. h. jedesmal nach dem Synchronisationssignal wird entweder ein High-Bit oder ein Low-Bit übertragen. Die empfangende Datenstation muß daher jeweils nach dem Ende des Spannungszustands V0 den Spannungspegel auf der Übertragunsleitung 1 abtasten, um ein High-Bit oder ein Low-Bit zu erkennen. Im Intervall t5 wird beispielsweise mit dem Spannungspegel V2 ein High-Bit übertragen. Im Zeitinervall t6 erfolgt wieder ein Synchronisationssignal und im Zeitintervall t7 wird wiederum ein High-Bit durch den Spannungspegel V2 angezeigt. Nach dem Synchronisationssignal im Zeitintervall t8 wird im Zeitintervall t9 ein Low-Bit auf der Übertragungsleitung 15 angezeigt. Ebenso wird im Zeitintervall t10 ein Synchronisationsbit und im Zeitintervall t11 ein darauffolgendes Low-Bit übertragen. Bis zu diesem Zeitpunkt wurden in der Figur 2 die Synchronisationssignale jeweils durch gleichlange Zeitintervalle t4, t6, t8, t10 und die Bitzustände ebenfalls durch gleichlange Zeitinervalle t5, t7, t9 und t11 dargestellt. Aufgrund der einfachen Synchronisation ist es jedoch nicht erforderlich, daß die Zeitdauer für das Synchronisationssignal oder das einzelne Datenbit eine vorbestimmte Länge aufweisen, solange wie eine gewisse Mindestlänge, die zur ausreichenden Identifizierung des Spannungspegels auf der Übertragungsleitung erforderlich ist, eingehalten wird. Im Zeitintervall t12 und im Zeitintervall t13 werden exemplarisch ein Synchronisationssignal und ein Low-Bit gezeigt, die eine abweichende Zeitdauer t12 bzw. t13 aufweisen. Das hier vorgestellte Übertragungsverfahren ist somit nicht darauf angewiesen, daß für die Signalpegel vorbestimmten Längen eingehalten werden.

In der Figur 1 wurde nur eine einzige Datenleitung 15 dargestellt, die beispielsweise durch einen Draht realisiert sein kann, der die beiden Datenstationen 31 und 32 miteinander verbindet. Alternativ ist es auch möglich, daß statt der einen Datenleitung 15 auch zwei Datenleitungen vorhanden sind, die mit einem Differenzsignal betrieben werden. Das Signal der Figur 2 bestände dann nicht in einem absoluten Spannungspegel auf einer Übertragungsleitung, sondern in der Differenz der Spannungspegel, die auf den beiden Datenleitungen anliegen. Statt Spannungspegel könnte auch eine oder zwei Datenleitungen verwendet werden, auf denen Ströme fließen. Weiterhin sind auch Lichtleitfasern als Übertragungsleitung geeignet, wobei dabei dann das Signal in unterschiedlichen Lichtintensitäten bestehen könnte.

Zur ersten Datenstation 31 wurde ausgeführt, daß sie ein Mikroprozessor 33 aufweist, während die zweite Datenstation 32 eine Logikschaltung 35 aufweist. Das erfindungsgemäße Verfahren ist zur Übertragung von Daten besonders vorteilhaft, wenn eine der beteiligten Datenstationen eine große "Intelligenz" aufweist, und die andere Datenstation bzw. die anderen Datenstatione vergleichsweise einfach ausgestaltet sind. Die intelligente Datenstation 31 weist daher einen Mikrorechner 33 auf, der eine Vielzahl von komplexen Aufgaben bearbeiten kann. Weiterhin weist der Mikrorechner 33 eine interne Uhr (clock) auf, mit der ein internes Taktsignal zur Erzeugung von Synchronisatonssignalen zur Verfügung steht. Dieses Synchronisationssignal wird dann durch die Übertragungsleitung 15 übertragen und dient als Maßstab für die Verarbeitung der Daten in der einfach ausgestalteten zweiten Datenstation 32. Die zweite Datenstation 32 weist beispielsweise nur eine einfache Logikschaltung 35 auf, die durch das Synchronisationssignal getaktet wird. Ein einfaches Beispiel für eine derartige Logikschaltung wird in der Figur 4 beschrieben. Weiterhin ist es möglich auch die Datenstation 31 als Logikschaltung auszuführen, die eine Quelle für ein Synchronisationssignal aufweist. Diese Station kann dann beispielsweise in zeitlichen Abständen Informationen an die Datenstation 32 senden. Weiterhin kann die Datenstation ein Mikrorechner aufweisen der zu übertragende Daten durch parallele Busleitungen an eine Logikeinheit abgibt, die dann die eigentliche Übertragung über die Datenleitung 15 vornimmt.

In der Figur 1 ist der Datenaustausch zwischen einer ersten und einer zweiten Datenstation 31, 32 beschrieben. Ebensogut kann das erfindungsgemäße Verfahren jedoch auch angewandt werden, wenn mehrere Datenstationen beteiligt sind, wobei in diesem Fall mindestens eine der Datenstationen in der Lage ist, ein Synchronisationssignal zu erzeugen. Die übertragenen Daten sollten in diesem Fall Adressen aufweisen, durch die klargestellt wird, für welche Station die jeweiligen Daten gerade bestimmt sind.

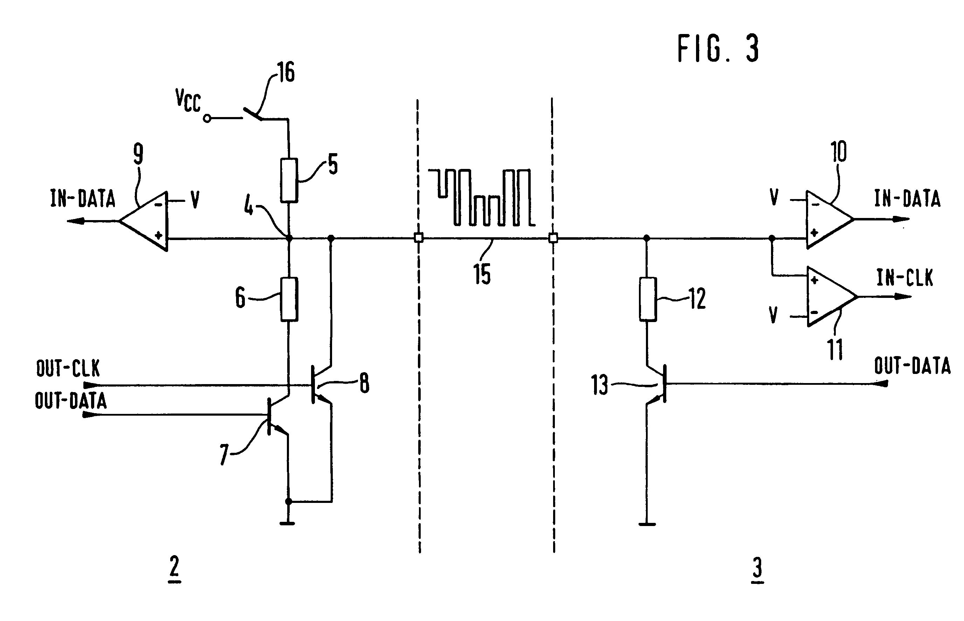

In der Figur 3 wird eine konkrete Ausgestaltung der Schnittstellen 2 und 3 dargestellt. In der Schnittstelle 2 ist die Übertragungsleitung 15 mit einem Knoten 4 eines Spannungsteilers aus den Widerständen 5 und 6 verbunden. Der Knoten 4 ist über den Widerstand 5 und einen Schalter 15 mit einer Versorgungsspannung VCC verbunden. Weiterhin ist der Knoten 4 über den Widerstand 6 mit dem Kollektor eines Transistors 7 verbunden, dessen Emitter mit Masse verbunden ist. Die Basis des Transistors 7 ist mit einer Leitung Out-Data mit dem hier nicht dargestellten Mikroprozessor 33 verbunden. Weiterhin ist in der Schnittstelle 2 die Übertragungsleitung 15 mit dem Kollektor eines Transistors 8 verbunden, dessen Emitter mit Masse verbunden ist. Der Basisanschluß des Transistors 8 ist mit einer Leitung Out-CLK mit dem nicht dargestellten Mikroprozessor 33 verbunden. Weiterhin ist in der Schnittstelle 2 die Übertragungsleitung 15 mit einem Eingang eines Komparators 9 verbunden, wobei der Komparator einen weiteren Eingang für eine Vergleichsspannung V aufweist. Der Komparator 9 weist einen Ausgang In-Data auf, der mit dem Mikroprozessor 33 verbunden ist.

In der Schnittstelle 3 ist die Übertragungsleitung 15 mit jeweils einem Eingang eines Komparators 10 und eines Komparators 11 verbunden. Jeder dieser Komparatoren 10, 11 weist noch einen weiteren Eingang für eine Vergleichsspannung V auf. Der Komparator 10 weist einen Ausgang In-Data auf, der mit der nicht dargestellten Logikschaltung 35 verbunden ist. Der Komparator 11 weist einen Ausgang IN-CLK auf, der ebenfalls mit der Logikschaltung verbunden ist. Weiterhin ist in der Schnittstelle 3 die Übertragungsleitung 15 über einen Widerstand 12 mit dem Kollektor eines Transistors 13 verbunden. Der Emitter des Transistors 13 ist mit Masse verbunden. Die Basis des Transistors 13 ist über eine Leitung Out-Data mit der Logikschaltung 35 verbunden.

Wenn der Schalter 15 der Schnittstelle 2 geschlossen ist, ist die Übertragungsleitung 15 über den Widerstand 5 mit dem Potential VCC verbunden und es wird so das Ruhepotential von V2 auf der Übertragungsleitung 15 eingestellt. Wenn auf der Leitung Out-Data ein Signal anliegt, wird der Transistor 7 leitend geschaltet und die Übertragungsleitung 15 wird durch den Spannungsteiler aus den Widerständen 5 und 6 auf ein Potential V1 gezogen. Wenn auf der Leitung Out-CLK ein Signal anliegt, wird der Widerstand 8 leitend geschaltet, und die Übertragungsleitung 15 wird niederohmig mit Masse verbunden, so daß sich dann auf der Übertragungsleitung ein Potential V0 einstellt. Die Schnittstelle 2 weist somit alle Mittel auf, um in Abhängigkeit von Steuersignalen des Mikroprozessors 33 auf der Übertragungsleitung 15 alle drei Spannungspegel V2, V1 und V0 zu realisieren.

In der Schnittstelle 3 ist für den Komparator 10 die Vergleichsspannung V so gewählt, daß am Ausgang In-Data des Komparators ein Signal, beispielsweise ein High-Pegel, anliegt, wenn die Übertragungsleitung 15 auf dem Wert V2 ist. Weiterhin ist die Vergleichsspannung V so gewählt, daß am Ausgang In-Data kein Signal bzw. ein Low-Signal anliegt, wenn die Übertragungsleitung 15 auf dem Spannungspegel V1 ist. Typischerweise wird dazu eine Vergleichsspannung gewählt, die zwischen V1 und V2 liegt. Der Komparator 11 weist eine Vergleichsspannung V auf, die so gewählt ist, daß der dritte Zustand, d. h. der Spannungspegel V0 sicher erkannt werden kann. Dazu liegt die Vergleichsspannung zwischen V0 und V1. Die Schnittstelle 3 weist somit Mittel auf, den ersten, zweiten und dritten Spannungspegel auf der Übertragungsleitung 15 zu unterscheiden und in Folge dessen Signale für die Logikschaltung 35 zur Verfügung zu stellen. Dabei wird aufgrund der Synchronisationssignale, die von der Schnittstelle 2 auf der Übertragungsleitung 15 erzeugt werden, in der Schnittstelle 3 ein Taktsignal auf der Leitung In-CLK (CLK=Clock) zur Verfügung gestellt, durch das die Logikschaltung 35 mit einem Taktsignal versorgt wird. Die Steuerung der Schnittstelle 2 durch den Mikroprozessor 33 erfolgt derart, daß vor der Ausgabe jedes High-Bit oder Low-Bit ein Synchronisationssignal ausgegeben wird. Dieses Synchronisationssignal stellt für die zweite Schnittstelle und die damit verbundene Logikeinheit 35 das Synchronisationssignal dar, mit dem die Bearbeitung der Bitpegel in der Schnittstelle 2 und der Logikeinheit 35 getaktet werden. Weiterhin sind in der Figur 3 Mittel angegeben, die eine Rückübertragung von Daten von der Schnittstelle 3 zur Schnittstelle 2 erlauben. Dazu weist die Schnittstelle 3 den Transistor 13 auf, der mit der Leitung Out-Data der Logikschaltung 35 verbunden ist. Über den Widerstand 12, der zusammen mit dem Widerstand 5 der Schnittstelle 2 einen Spannungsteiler bildet, kann so die Übertragungsleitung 15 wahlweise mit dem Potential V2 oder V1 beaufschlagt werden. Der Komparator 9 der Schnittstelle2 ist mit einem entsprechenden Vergleichspotential V verbunden, welches dann erlaubt, zwischen den Spannungszuständen V2 und V1 auf der Übertragungsleitung 15 zu unterscheiden. Dabei ist jedoch zu beachten, daß die Schnittstelle 3 keinerlei Mittel aufweisen, die es erlauben, den dritten Zustand mit dem Spannungspegel V0 auf der Übertragungsleitung 15 zu realisieren. Nur die Schnittstelle 2 weist die dazu gehörigen Mittel auf. Wenn somit eine Datenübertragung von der Schnittstelle 3 zur Schnittstelle 2 geplant ist, so wird das Taktsignal nach wie vor von der Schnittstelle 2 zur Verfügung gestellt. Dazu gibt die Schnittstelle 2 ein Synchronisationssignal auf die Übertragungsleitung 15, indem sie über den Transistor 8 mit Masse verbunden wird. Wenn dann der Transistor 8 sperrt, wird sich in Abhängigkeit des Schaltzustandes des Transistors 13 der Schnittstelle 3 ein entsprechender Spannungspegel V2 oder V1 auf der Übertragungsleitung 15 einstellen.

Der Schalter 15 kann auch genutzt werden um die Datenstation 32 aus einem "stand-by" Zustand, mit geringer Stromaufnahme, in einen Betriebszustand zu bringen. Dazu wäre dann die Übertragung- bzw. Datenleitung 15 noch mit einem Bauelement zu verbinden, welches im "stand-by" Zustand die Beaufschlagung der Datenleitung 15 mit dem Spannungspegel V2 erkennt. In Falle eines Reglers für eine Lichtmaschiene würde der Schalter 16 mit dem Zündschloß gekoppelt werden.

Wenn mehrere Schnittstellen mit der Übertragungsleitung 15 verbunden sind, ist das Gesamtsystem so ausgelegt, daß zu jedem Zeitpunkt nur eine einzige Station ein Synchronisationssignal auf der Übertragungsleitung 15 erzeugen kann. Vorteilhaft ist an diesem System besonders, daß nur die Station, die das Synchronisationssignal erzeugt, eine gewisse Intelligenz aufweisen muß, und die Mittel besitzen muß, ein Synchronisiersignal zu erzeugen. Die anderen Datenstationen können besonders einfach ausgebildet sein, insbesonder müssen in diesen Stationen keine Schwingkreise vorliegen, mit denen ein Taktsignal erzeugt wird. Weiterhin können diese Stationen in Form einer einfachen Logikschaltung realisiert sein.

In der Figur 4 wird ein einfaches Beispiel für eine Logikschaltung 35 gezeigt. Dieses Beispiel bezieht sich auf einen Regler für eine Lichtmaschine, wie sie im Kraftfahrzeug verwendet wird. Bei einem derartigen Regler ist es wünschenswert, daß eine Motorsteuerung an einen Lichtmaschinenregler ein Signal übertragen kann, mit dem die Regelspannung des Lichtmaschinenreglers eingestellt wird. Es soll somit durch eine Übertragungsleitung ein analoges Signal, welches einer Spannung entspricht, zum Regler übertragen werden. Da in einem Kraftfahrzeug zahlreiche Störspannungen auftreten, ist es nicht möglich, ein derartiges analoges Signal direkt zu übertragen, da die Spannungspegel auf der Leitung in Folge von Störungen variieren können. Der Regler muß jedoch nur das in Form von Bits übertragene Spannungssignal verstehen und kann ansonsten vergleichsweise einfach aufgebaut sein. Ein derartiger Regler, der einer Schnittstelle 3 nachgeordnet ist, wird in der Figur 4 gezeigt. Der Regler weist ein Schieberegister 41 auf, dessen Dateneingang mit der Leitung In-Data der Schnittstelle 3 verbunden ist. Weiterhin weist das Schieberegister 41 einen Takteingang 46 auf, die mit einer Verzögerung 45 verbunden ist. Bei einer derartigen Verzögerung kann es sich um jedes beliebige Bauteil handeln, mit dem eine kurze Verzögerung des Signals verbunden ist. Dies ist erforderlich, da sich nach dem Übergang von V0 auf einem der Bitpegel V1 oder V2 am Dateneingang des Schieberegisters 41 erst ein definierter Signalpegel einstellen muß. Wenn über die Übertragungsleitung 15 die Abfolge von Spannungspegeln geschickt wurde, wie sie in der Figur 2 dargestellt sind, so wird in das Schieberegister 41 der Wert 11000 eingelesen. Dieser Wert liegt dann an den parallelen Ausgangsleitungen 42 des Schieberegisters 41 an und dient als Eingangswert für einen Digital-Analog-Wandler 43. In Abhängigkeit von dem an dem parallelen Leitungen 42 anliegenden Bits wird dann ein Ausgangswert, beispielsweise eine analoge Ausgangsspannung auf der Ausgangsleitung 44 des Digital-Analog-Wandlers ausgegeben. Ein derartiger Spannungswert stellt dann den Schaltpegel des Generatorreglers dar.

Weiterhin weist das Schieberegister 41 einen Reseteingang 48 auf, mit dem der Inhalt des Schieberegisters 41 auf einen vorgegebenen Startwert gesetzt werden kann. Der Reseteingang 48 ist mit einem Reset-Baustein 47 verbunden das mit der In-Data-Leitung und der In-CLK-Leitung verbunden ist. Der Reset-Baustein 47 erkennt ob eine Spannungsänderung auf der Leitung In-Data erfolgt ist, ohne daß zuvor ein Signal auf der In-CLK-Leitung angelegt war. Wenn dies der Fall ist so wird ein Resetsignal erzeugt, mit dem das Schieberegister 41 auf den Startwert gesetzt wird. Ein derartiges Signal wird in der Figur 2 im Intervall t2 genutzt um den Beginn einer Datenübertragung zu signalisieren. Das Schieberegister 41 kann somit immer ausgehend von einem vorgegebenen Startwert neu geladen werden.

Wie in der Figur 4 zu erkennen ist, können auf der Empfangsseite einfache logische Schaltkreise dazu genutzt werden, die digital über die Übertragungsleitung 15 übertragenen Datenworte auszuwerten. Eine gewisse Intelligenz zum Betreiben der Datenübertragung muß im wesentlichen nur in der Station vorhanden sein, die auch das Synchronisationssignal zur Verfügung stellt. Das System ist daher besonders gut geeignet, wenn eine intelligente Hauptstation eine oder mehrere vergleichsweise einfach aufgebaute Stationen anspricht.

Ausgestaltungen der Erfindung sind in den Figuren 5 bis 9 dargestellt. Mit einer Bit-synchronen Schnittstelle läßt sich ein Verfahren zur Datenübertragung realisieren, bei dem die zu übertragende Information mit zwei unterschiedlichen Spannungspegeln darstellbar ist.

Eine Bit-synchrone Schnittstelle kann beispielsweise in einem Kraftfahrzeug eingesetzt werden, wobei sich die Verbindung zwischen dem Spannungsregler und dem Bordnetz bzw. zwischen dem Spannungsregler und dem Steuergerät mit der digitalen Motorelektronik besonders eignet.

Den Schnittstellenaufbau zeigt Figur 5. Wird diese Schnittstelle bei einem prinzipiell bereits bekannten Fahrzeugbordnetz mit Spannungsregler nach Figur 9 eingesetzt, läßt sich ein Spannungsregelungssystem aufbauen, das einen optimalen Batterieladezustand gewährleistet und die Ladebilanz gegenüber herkömmlichen Systemen verbessert. Bei einem Multifunktionsregler sind optimale Verbindungen zum Steuergerät der Motorelektronik möglich, ohne daß Mehrkosten entstehen. Es läßt sich eine schnelle und sichere Regelung vor Ort durchführen mit einer zentralen Erzeugung von Stellgrößen.

Die einzelnen Möglichkeiten werden durch die in den Tabellen 1 bis 5 angegebenen Maßnahmen erzielt. Sie sind in Verbindung mit den Figuren und den nachfolgend näher bezeichneten Einzelheiten zu verstehen.

### Schnittstelle Regler-Bordnetz

**Tab1**

| | |
|---|---|
| - | Übertragungsrate der Schnittstelle ? |
| - | genaue Befehlsdefinition für den Regler ? |
| - | Adresszuweisung und damit Priorisierung des Reglers? |
| - | maximale Anzahl von Empfänger für diese Schnittstelle? |
| | → Anzahl notwendiger Bits für die Adressierung |

### Schnittstelle Regler-Bordnetz

### Mögliche Befehle

**Tab2**

| **Schreiben:** | |
|---|---|
| - | Regelspannungsoffset 6 bit (ca. 100mV Schritte) |
| - | Regelung: Regelung AUS/EIN |
| - | LRD 3 bit: 0, 2, 4,..., 14s |
| - | Meßmodus |

### Schnittstelle Regler-Bordnetz

### Mögliche Information

**Tab3**

| **Lesen:** | | |
|---|---|---|
| - | DFM-Wert 5 bit (Auflösuung ca. 3%) | |
| - | Fehler-/Statusflag 6 bit: | |
| | | Überspannung |
| | | Unterspannung |
| | | Feldendstufenkurzschluß gegen Plus |
| | | Feldunterbrechung/Kurzschluß nach Masse |
| | | Riemenbruch |
| | | Vollastmonitor |

### Schnittstelle Regler-Bordnetz

### Start-/Stop-Sequenz

**Tab4**

| | |
|---|---|
| 1. | Erkennung ZS-EIN über HIGH-Pegel an Schnittstelle, Regler aktiviert sich, aber keine Erregung |
| 2. | Zyklische Deaktivierung (max 2s Abstand) der Regelung durch Übertragung des Regelung AUS-Befehls |
| 3. | Bei Nichtsetzen von Regelung-AUS innerhalb 2s geht der Regler in den Normalregelmodus → Notanlauf über Klemme V |
| 4. | Bei Erkennung Generator dreht, ohne ZS-EIN, geht der Regler sofort in den Normalregelmodus → Notanlauf über Klemme V |
| 5. | Bei ZS-AUS und Generator steht, wird der Regler abgeschaltet |

### Schnittstelle Regler-Bordnetz

### Fehlerauswertung

**Tab5**

| | |
|---|---|
| 1. | Wird innerhalb 2s keine gültige Botschaft übertragen, so geht der Regler mit allen Parametern in den Defaultzustand |
| 2. | Fehler werden zum Steuergerät übertragen und von diesem verarbeitet und eventuell angezeigt |
| 3. | Eine nicht erfolgreiche Verbindung zum Regler wertet das Steuergerät aus |

In Figur 5 ist die Schnittstelle zwischen einem Spannungsregler 50 und der digitalen Motorelektronik 51, beispielsweise dem Steuergerät einer Brennkraftmaschine oder eines sogenannten Bordnetzsteuergerätes oder einer sonstigen Elektronik beschrieben. Die Verbindung erfolgt lediglich über eine Leitung 52, die zwischen den Verstärkern 53 des Reglers und 54 der digitalen Motorelektronik liegt. Am Ausgang der beiden Verstärker 53, 54 entsteht das Signal DataIN. Der Basis eines Transistors 55 des Reglers 50, dessen Kollektor mit der Leitung 52 und dessen Emitter mit Masse verbunden ist, wird das Signal DataOUT zugeführt. In der digitalen Motorelektronik DME 51 ist ein Transistor 56 vorhanden, dessen Emitter auf Masse liegt und dessen Kollektor mit der Leitung 52 verbunden ist. Über einen Widerstand 57 und ein Schaltmittel 58 kann der Kollektor des Transistors 56 an Batteriespannung UB gelegt werden. Der Basis des Transistors 56 wird das Signal DataOUT zugeführt.

Mit der in Figur 5 dargestellten Schnittstelle zwischen Regler 50 und DME 51 läßt sich ein erfindungsgemäßes Verfahren zur Übertragung von Daten und zum Empfang von Daten realisieren. Eine bidirektionale, Bit-synchrone Übertragung von Bitinformationen mit den Informationsbits SYNC, 0 und 1 durchführen. Die drei Informationen unterscheiden sich durch eine Puls-Pause codierte Einzelperiode. Der Signalverlauf ist in Figur 7 dargestellt. Wird eine solche Information über die Leitung 52 gegeben, lassen sich die gewünschten Daten übertragen. Zur Synchronisierung werden vom Master kontinuierliche SYNC-Informationen gesendet, lediglich während einer Übertragungsbotschaft von n-Bits werden 0 oder 1 Informationen vom oder zum Master übertragen. Es wird also eine Folge Sync-Impulse-Übertragungsbotschaft-Sync-Impulse übertragen. In Figur 6 ist ein Übertragungsprotokoll dargestellt, das den zeitlichen Ablauf des übertragenen Signales aufzeigt. Mit DIR ist das Bit für die Datenrichtung gemeint, wobei entweder vom Master (DME) 51 zum Slave (Regler) 50 gesendet wird oder vom Slave (Regler) zum Master (DME). Mit ADDRESS sind Bits bezeichnet, für die gilt: wenn vom Master (DME) gesendet wird, wird hier die Adresse des Empfängers angegeben, wenn vom Slave (Regler) gesendet wird, bezeichnet dieser Signalteil die Adresse des Slave.

Mit COMMAND sind Befehle oder ein Registerindex bezeichnet. Unter DATA werden die Sende- bzw. Empfangsdaten abgegeben. P bezeichnet Parity vom Sender und ACKN die Bestätigung vom Empfänger.

Da bei der in den Figuren 6 und 7 dargestellten bidirektionalen Bit-synchronen Übertragungen von Bitinformationen nur mit zwei Spannungspegeln gearbeitet wird und die unterschiedlichen Informationen in unterschiedliche Pulspauseverhältnisse eingebunden werden, läßt sich der volle Spannungshub ausnutzen und somit maximaler Störabstand erreichen. Das Signal SYNC kommt immer vom Master, es können daher One-Chip-Oszillatoren ohne Quarz verwendet werden, da die Möglichkeit der Synchronisierung besteht. Die Synchronisierung kann auf die Bit-Information erfolgen, das heißt Fehler und Toleranzen gelten nur für Einzelbits und werden nicht im Übertragungswort aufaddiert. Die bidirektionale Übertragung erfolgt wir bereits erwähnt, lediglich durch einfache Verlängerung des SYNC-Signals zu einer 0- oder 1-Information. Eine Priorisierung ist möglich, da beispielsweise die 1-Information länger ist als die 0-Information.

Ein Zusammenstellung der Basisfunktion sowie mögliche Komfortfunktionen wird in Figur 8 gegeben, wobei zum einen ein 2-Pegel-Signal aufgeführt ist. Weiterhin ein pulsweitenmoduliertes Signal, eine Bit-synchrone Schnittstelle und ein CAN-Bus. Die Bit-synchrone Schnittstelle sowie der CAN-Bus lassen sich für die Basisfunktionen und die Komfortfunktionen ausweiten. Als Basisfunktion wird eine Kennlinie für die Regelfunktion angegeben. Komfortfunktionen sind eine Load-Responce-Funktion, ein DF-Monitor, mit dem das an der Klemme DF anliegende Signal verarbeitet wird. Eine weitere Komfortfunktion ist eine Fehleranzeige, mit der die eigentliche Anzeige sowie Diagnose erfolgen kann. Sonstige Funktionen sind möglich.

In Figur 9 ist eine Einsatzmöglichkeit der erfindungsgemäßen Schnittstelle bzw. des erfindungsgemäßen Verfahrens für ein Fahrzeugbordnetz dargestellt. Dieses Fahrzeugbordnetz umfaßt in bekannter Weise einen Drehstromgenerator 90, den Bürstenhalter 91 mit den Anschlußklemmen B+, DF und V. Der Regler 92, der dem Regler 50 nach Figur 5 entspricht, hat die Klemme D- und umfaßt in bekannter Weise ein Leistungsteil 93 und ein Steuerteil 94. Das Steuerteil 94 des Reglers 92 ist über die Schnittstelle COM mit der DME 95 verbunden, die beispielsweise der digitalen Motorelektronik 51 nach Figur 5 entspricht. Zwischen der DME 95 und dem Regler 92 werden Steuersignale ST und Diagnosesignale DI ausgetauscht. Eine nicht näher gezeigte Verbindung der Ladekontrollampe 96 ermöglicht eine Fehleranzeige. Vom Bordnetz 97 ist lediglich die Batterie 98, ein Verbraucher 99 sowie der Starter 100 dargestellt. Der Verbraucher 99 ist dabei über Schaltmittel 101 mit dem Pluspol der Batterie 98 verbindbar und der Starter 100 ist über den Schalter 102 (Zündschalter ZS) mit der Klemme Kl.15 verbindbar, die ihrerseits über den Anlasser auf Klemme Kl. 30 und damit zur Batterie 98 führt.

Der Generatorstrom IG wird über Klemme B+ ausgekoppelt und führt zum positiven Anschluß der Batterie 98. Am Ausgang der durch beispielsweise sechs Zenerdioden gebildeten Gleichrichterbrücke 104 liegt noch ein Kondensator 105. Vom Drehstromgenerator 90 sind im übrigen lediglich die Feldwicklung 106 sowie die Ständerwicklungen 107, 108 und 109 dargestellt.

Zwischen dem Steuergerät DME 95 und dem Spannungsregler 92 bzw. dessen Steuerteil 94 kann die erfindungsgemäße Datenübertragung ablaufen, wobei ein Datentransfer in beide Richtungen möglich ist. Dem Steuergerät 95 lassen sich so Informationen vom Spannungsregler zuführen, das Steuergerät 95 kann seinerseits die gewünschten Regelfunktionen, beispielsweise die in Figur 8 aufgeführten Basis- bzw. Komfortfunktionen durchführen.

## Patentansprüche

1. Verfahren zur Übertragung von Daten über eine Übertragungsleitung (15) durch Übertragung einer Folge eines ersten oder eines zweiten voneinander unterscheidbaren Zustands auf der Übertragungsleitung, wobei der erste Zustand einem High-Bit und der zweite Zustand einem Low-Bit entspricht, wobei ein dritter Zustand auf der Übertragungsleitung (15) erzeugbar ist, der von den ersten beiden Zuständen unterscheidbar ist, und dass der dritte Zustand als Synchronisationssignal verwendet wird, wobei die Zustände durch Impulsdauern dargestellt werden und die Dauern der Impulse aller drei Zustände sich voneinander unterscheiden, **dadurch gekennzeichnet, dass** das Synchronisationssignal gebildet wird, indem die Übertragungsleitung für eine vorbestimmte Mindestzeit in den dritten Zustand gebracht wird, wobei die Übertragungsleitung weiterhin für eine vorbestimmte Mindestzeit in den ersten oder zweiten Zustand gebracht wird, um ein High-Bit oder Low-Bit anzuzeigen, und dass vor jedem High-Bit oder Low-Bit ein Synchronisationssignal übertragen wird.

2. Verfahren nach Anspruch 1, **dadurch gekennzeichnet, dass** die Übertragungsleitung einen Ruhezustand aufweist, indem sie in einem der drei Zustände gehalten wird, und dass der Beginn einer Datenübertragung **dadurch** angezeigt wird, dass die Übertragungsleitung in einem anderen als den Ruhezustand gebracht wird.

3. Verfahren nach einem der vorhergehenden Ansprüche, **dadurch gekennzeichnet, dass** die drei unterschiedlichen Zustände **dadurch** realisiert werden, dass auf einem elektrischen Leiter unterschiedliche Spannungspegel erzeugt werden.

4. Verfahren nach Anspruch 1, **dadurch gekennzeichnet, dass** die erste Einrichtung ein Mikroprozessor, insbesondere ein Steuergerät in einem Kraftfahrzeug ist und die zweite Einrichtung der Spannungsregler des Kraftfahrzeugs.

5. Verfahren nach Anspruch 1 oder 4, **dadurch gekennzeichnet, dass** mehrere Empfänger vorhanden sind und ein Übertragungsprotokoll erzeugt wird.

6. Schnittstelle (2) zum Aussenden von Daten, die mit einer Übertragungsleitung verbunden ist, wobei die Schnittstelle erste Mittel aufweist, eine Folge eines ersten oder eines zweiten voneinander unterscheidbaren Zustands auf der Übertragungsleitung zu erzeugen, wobei der erste Zustand einem High-Bit und der zweite Zustand einem Low-Bit entspricht, und zweite Mittel vorgesehen sind, um in Umsetzung eines Synchronisationssignals auf der Datenleitung einen dritten Zustand zu erzeugen, der vom ersten und zweiten Zustand unterscheidbar ist, wobei die Mittel die Zustände durch Impulsdauern darstellen und die Dauern der Impulse aller drei Zustände sich voneinander unterscheiden, **dadurch gekennzeichnet, dass** die zweiten Mittel derart gestaltet sind, dass sie das Synchronisationssignal bilden, indem die Übertragungsleitung für eine vorbestimmte Mindestzeit in den dritten Zustand gebracht wird, wobei die ersten Mittel derart gestaltet sind, die Übertragungsleitung weiterhin für eine vorbestimmte Mindestzeit in den ersten oder zweiten Zustand zu bringen, um ein High-Bit oder Low-Bit anzuzeigen, und die zweiten Mittel derart gestaltet sind, das vor jedem High-Bit oder Low-Bit ein Synchronisationssignal übertragen wird.

7. Schnittstelle nach Anspruch 6, **dadurch gekennzeichnet, dass** die drei unterschiedlichen Zustände durch Spannungspegel auf einem elektrischen Leiter realisiert sind.

8. Schnittstelle nach Anspruch 7, **dadurch gekennzeichnet, dass** die ersten Mittel einen Spannungsteiler mit einem ersten Widerstand (5) und einem zweiten Widerstand (6) aufweisen, dass der erste Widerstand (5) zwischen einer ersten Spannung (VCC) und einem Knoten angeordnet ist, dass der zweite Widerstand zwischen dem Knoten und einem Schalter angeordnet ist, und dass der Schalter zwischen dem zweiten Widerstand (6) und einer zweiten Spannung (Masse) angeordnet ist, dass der Schalter wahlweise zur Ausgabe eines High-Bit oder Low-Bit schaltbar ist, und dass die Übertragungsleitung (15) mit dem Knoten (4) verbunden ist.

9. Schnittstelle nach Anspruch 8, **dadurch gekennzeichnet, dass** die zweiten Mittel einen Schalter aufweisen, mit dem die Übertragungsleitung mit der ersten oder der zweiten Spannung verbindbar ist, und dass der Schalter in Abhängigkeit von Synchronisationssignalen schaltbar ist.

10. Schnittstelle nach Anspruch 7 bis 9, **dadurch gekennzeichnet, dass** eine Datenleitung (Out-Data) und eine Synchronisationsleitung (Out-CLK) zur Ansteuerung der Schalter vorgesehen sind, und dass die Datenleitung (Out-Data) und die Synchronisationsleitung (Out-CLK) mit einem Mikroprozessor, insbesondere einem Mikroprozessor eines Motorsteuergerätes, verbunden sind.

11. Vorrichtung mit einer Schnittstelle gemäß Anspruch 6.

12. Vorrichtung nach Anspruch 11, **dadurch gekennzeichnet, dass** die drei Zustände durch voneinander unterscheidbare Spannungspegel realisiert sind.

## Claims

1. Method for transmitting data via a transmission line (15) by transmitting a sequence of a first state or a second state, which can be distinguished from one another, on the transmission line, the first state corresponding to a high bit and the second state corresponding to a low bit, a third state which can be distinguished from the first two states being able to be generated on the transmission line (15), and the third state being used as a synchronization signal, the states being represented by pulse durations and the duration of the pulses of all three states differing from one another, **characterized in that** the synchronization signal is formed by changing the transmission line to the third state for a predetermined minimum amount of time, the transmission line also being changed to the first or second state for a predetermined minimum amount of time in order to indicate a high bit or a low bit, and **in that** a synchronization signal is transmitted before each high bit or low bit.

2. Method according to Claim 1, **characterized in that** the transmission line has a quiescent state by virtue of it being held in one of the three states, and **in that** the start of data transmission is indicated by changing the transmission line to a state other than the quiescent state.

3. Method according to one of the preceding claims, **characterized in that** the three different states are realized by generating different voltage levels on an electrical conductor.

4. Method according to Claim 1, **characterized in that** the first device is a microprocessor, in particular a controller in a motor vehicle, and the second device is the voltage regulator of the motor vehicle.

5. Method according to Claim 1 or 4, **characterized in that** a plurality of receivers are present and a transmission protocol is generated.

6. Data transmission interface (2) which is connected to a transmission line, the interface having first means for generating a sequence of a first state or a second state, which can be distinguished from one another, on the transmission line, the first state corresponding to a high bit and the second state corresponding to a low bit, and second means being provided for generating a third state, which can be distinguished from the first and second states, when implementing a synchronization signal on the data line, the means representing the states by pulse durations and the durations of the pulses of all three states differing from one another, **characterized in that** the second means are configured in such a manner that they form the synchronization signal by changing the transmission line to the third state for a predetermined minimum amount of time, the first means being configured to also change the transmission line to the first or second state for a predetermined minimum amount of time in order to indicate a high bit or a low bit, and the second means being configured in such a manner that a synchronization signal is transmitted before each high bit or low bit.

7. Interface according to Claim 6, **characterized in that** the three different states are realized by voltage levels on an electrical conductor.

8. Interface according to Claim 7, **characterized in that** the first means have a voltage divider having a first resistor (5) and a second resistor (6), **in that** the first resistor (5) is arranged between a first voltage (VCC) and a node, **in that** the second resistor is arranged between the node and a switch, and **in that** the switch is arranged between the second resistor (6) and a second voltage (earth), **in that** the switch can be selectively switched to output a high bit or a low bit, and **in that** the transmission line (15) is connected to the node (4).

9. Interface according to Claim 8, **characterized in that** the second means have a switch which can be used to connect the transmission line to the first or second voltage, and **in that** the switch can be switched on the basis of synchronization signals.

10. Interface according to Claims 7 to 9, **characterized in that** a data line (Out-Data) and a synchronization line (Out-CLK) are provided for driving the switches, and **in that** the data line (Out-Data) and the synchronization line (Out-CLK) are connected to a microprocessor, in particular a microprocessor of an engine controller.

11. Apparatus having an interface according to Claim 6.

12. Apparatus according to Claim 11, **characterized in that** the three states are realized by voltage levels which can be distinguished from one another.

## Revendications

1. Procédé de transmission de données par un conducteur de transmission (15) en transmettant une succession d'un premier état ou d'un deuxième état qui peuvent être distingués l'un de l'autre sur le conducteur de transmission,
le premier état correspondant à un bit haut et le deuxième état à un bit bas,
un troisième état qui peut être distingué des deux premiers états pouvant être formé sur le conducteur de transmission (15), et le troisième état étant utilisé comme signal de synchronisation,
les états étant représentés par des durées d'impulsion et la durée des impulsions de tous les trois états étant différente d'un état à l'autre,
**caractérisé en ce que**
le signal de synchronisation est formé en amenant le conducteur de transmission dans le troisième état pendant une durée minimale prédéterminée,
**en ce que** le conducteur de transmission est en outre amené pendant une durée minimale prédéterminée dans le premier état ou dans le deuxième état pour indiquer un bit haut ou un bit bas
et **en ce qu'**un signal de synchronisation est transmis avant chaque bit haut ou chaque bit bas.

2. Procédé selon la revendication 1, **caractérisé en ce que** le conducteur de transmission présente un état de repos dans lequel il est maintenu dans l'un des trois états et **en ce que** le début d'une transmission de données est indiqué par le fait que le conducteur de transmission est amené dans un état autre que l'état de repos.

3. Procédé selon l'une des revendications précédentes, **caractérisé en ce que** les trois états différents sont réalisés en formant différents niveaux de tension sur un conducteur électrique.

4. Procédé selon la revendication 1, **caractérisé en ce que** le premier dispositif est un microprocesseur, en particulier un appareil de commande placé dans un véhicule automobile et le deuxième dispositif est le régulateur de tension du véhicule automobile.

5. Procédé selon la revendication 1 ou 4, **caractérisé en ce que** plusieurs récepteurs sont prévus et **en ce qu'**un protocole de transmission est formé.

6. Interface (2) d'envoi de données reliée à un conducteur de transmission, l'interface présentant des premiers moyens qui forment une succession d'un premier état ou d'un deuxième état qui peuvent être distingués l'un de l'autre sur le conducteur de transmission, le premier état correspondant à un bit haut et le deuxième état à un bit bas,
et des deuxièmes moyens étant prévus pour former un troisième état qui correspond à un signal de synchronisation sur le conducteur de données et qui peut être distingué du premier et du deuxième état les moyens représentant les états par la durée des impulsions et tous les trois états ayant des impulsions de durée différente,
**caractérisée en ce que**
les deuxièmes moyens sont configurés de manière à former le signal de synchronisation en amenant le conducteur de transmission dans le troisième état pendant une durée minimale prédéterminée,
**en ce que** les premiers moyens sont en outre configurés pour amener le conducteur de transmission dans le premier ou le deuxième état pendant une durée minimale prédéterminée pour indiquer un bit haut ou un bit bas et
**en ce que** les deuxièmes moyens sont configurés de manière à transmettre un signal de synchronisation avant chaque bit haut ou chaque bit bas.

7. Interface selon la revendication 6, **caractérisée en ce que** les trois états différents sont réalisés par des niveaux de tension sur un conducteur électrique.

8. Interface selon la revendication 7, **caractérisée en ce que** les premiers moyens présentent un diviseur de tension qui présente une première résistance (5) et une deuxième résistance (6),
**en ce que** la première résistance (5) est placée entre une première tension (VCC) et un noeud,
**en ce que** la deuxième résistance est disposée entre le noeud et un commutateur,
**en ce que** le commutateur est disposé entre la deuxième résistance (6) et une deuxième tension (masse),
**en ce que** le commutateur peut être commuté sélectivement pour émettre un bit haut ou un bit bas et
**en ce que** le conducteur de transmission (15) est relié au noeud (4).

9. Interface selon la revendication 8, **caractérisée en ce que** les deuxièmes moyens présentent un commutateur qui permet de raccorder le conducteur de transmission à la première ou à la deuxième tension et **en ce que** le commutateur peut être commuté en fonction de signaux de synchronisation.

10. Interface selon les revendications 7 à 9, **caractérisée en ce qu'**un conducteur de données (out-data) et un conducteur de synchronisation (out-CLK) sont prévus pour commander les commutateurs et **en ce que** le conducteur de données (out-data) et le conducteur de synchronisation (out-CLK) sont reliés à un microprocesseur et en particulier au microprocesseur d'un appareil de commande de moteur.

11. Dispositif présentant une interface selon la revendication 6.

12. Dispositif selon la revendication 11, **caractérisé en ce que** les trois états sont réalisés par des niveaux de tension qui peuvent être distingués les uns des autres.
